# EUROPÄISCHE PATENTANMELDUNG

(11) **EP 4 427 929 A1**
(43) Veröffentlichungstag der Anmeldung: **11.09.2024**
(21) Anmeldenummer: 23160499.2
(22) Anmeldetag: 07.03.2023
(51) Int. Cl.: B32B 13/04, B32B 3/26, B32B 5/02, B32B 5/08, B32B 5/18, B32B 5/24, B32B 5/32

(54) **KONSTRUKTIONSELEMENT UND VERFAHREN ZU DESSEN HERSTELLUNG SOWIE DESSEN VERWENDUNG**

(71) Anmelder: Dauksch, Enrico, 01558 Großenhain (DE)
(72) Erfinder: Dauksch, Enrico, 01558 Großenhain (DE)
(74) Vertreter: Lippert Stachow Patentanwälte Rechtsanwälte Partnerschaft mbB

(57) **Zusammenfassung**

Es wird ein Konstruktionselement 1 angegeben, das einen wasserdichten Hartschaumkern 2 aus Polyethylenterephthalat und zumindest eine auf einer Oberfläche des Hartschaumkerns 2 angeordnete Schicht 3', 3" mit einem mineralischen Baustoff aufweist. Daneben werden ein Verfahren zur Herstellung eines solchen Konstruktionselements 1 sowie Verwendungen des Konstruktionselements 1 angegeben.

## Beschreibung

Die Erfindung betrifft ein Konstruktionselement, ein Verfahren zu dessen Herstellung sowie dessen Verwendung.

Konstruktionselemente, insbesondere Bauplatten, können beispielsweise zur Errichtung einer Wand oder Decke, zur Oberflächenverkleidung einer vorhandenen Wand oder Decke oder zum Aufbau eines Fußbodens auf einer vorhandenen Bodenplatte oder Geschossdecke in Gebäuden verwendet werden. Häufig ist hierfür eine gute Wärmedämmwirkung und je nach konkretem Anwendungszweck auch eine Wasserdichtheit wünschenswert.

Die derzeit verwendeten Bauplatten sind oft als Verbundplatten ausgebildet und weisen meist einen Hartschaumkern aus einem extrudierten Polystyrol auf, welcher beidseitig von einer versteifenden, den Hartschaumkern vor Beschädigungen schützenden und als Haftuntergrund für die Deckschicht des Bauteils dienenden Oberflächenschicht bedeckt ist. Extrudiertes Polystyrol weist eine hohe Dichte und Druckfestigkeit auf und hat eine homogene Struktur.

Hartschaum aus expandiertem Polystyrol ist demgegenüber durch seine grobkörnige Struktur charakterisiert. Expandiertes Polystyrol wird aufgrund seiner sehr geringen Wärmeleitfähigkeit als einlagige Platte zur Wärme- und Trittschalldämmung verwendet. Als Verbundplatte ist es mitunter als einseitige Lage an steifen Platten, wie beispielsweise Gipskarton, angebracht.

Beide genannten Hartschaummaterialien weisen eine geringe Dichte und eine geschlossenzellige Struktur auf. Sie sind beständig gegenüber Einwirkungen von Wasser und Feuchtigkeit. Letzteres trifft aufgrund der gleichmäßigen Struktur insbesondere auf extrudiertes Polystyrol zu.

Der Nachteil der bekannten Bauplatten besteht in deren ungünstiger energetischer Bilanz hinsichtlich der energieintensiven Herstellung, des nur bedingt möglichen Recyclings und der aufwendigen Entsorgung bzw. Verwertung. Zudem erfüllen die Wärmedämmeigenschaften heutige Bedürfnisse nur teilweise.

Es besteht daher ein Bedarf an einem Konstruktionselement mit verbesserten Wärmedämmeigenschaften. Wünschenswert wäre zudem ein Konstruktionselement, das möglichst energieeffizient hergestellt werden kann und dessen bauphysikalische Eigenschaften im Wesentlichen denjenigen eines Konstruktionselements aus extrudiertem Polystyrol entsprechen. Darüber hinaus sollte das Konstruktionselement auch in Feuchträumen, insbesondere in solchen Feuchträumen, in denen zum Schutz des Bauwerks besondere Anforderungen an die Abdichtung von Einbauten bestehen, anwendbar sein.

Gelöst wird dies Aufgabe durch die Gegenstände der unabhängigen Ansprüche. Die abhängigen Ansprüche betreffen weitere Ausgestaltungen.

Erfindungsgemäß weist das Konstruktionselement einen wasserdichten Hartschaumkern aus Polyethylenterephthalat auf. Dies bedeutet, dass der Hartschaumkern im Wesentlichen aus Polyethylenterephthalat besteht, d. h. neben Polyethylenterephthalat können nicht mechanisch wirkende Zusatzstoffe wie z. B. Farbpigmente, Brandschutzmittel, pilzhemmende Mittel etc. enthalten sein.

Unter "Polyethylenterephthalat" ist ein durch Polykondensation aus Terephthalsäure und Ethylenglycol hergestellter thermoplastischer Kunststoff aus der Familie der Polyester zu verstehen. Die Summenformel der Wiederholeinheit lautet: C₁₀H₈O₄, die molare Masse der Wiederholeinheit beträgt 192,17 g/ml und die CAS-Nummer ist 25038-59-9.

Unter "Hartschaum" wird ein geschäumtes Material bzw. Schaumstoff verstanden, das bzw. der einer Verformung unter Druckbelastung einen derart hohen Widerstand entgegensetzt, dass es bzw. er als Konstruktionsmaterial genutzt werden kann.

Der Begriff "Kern" bezeichnet vorliegend eine Komponente des Konstruktionselements, die zumindest teilweise oder abschnittsweise von einer weiteren Komponente des Konstruktionselements bedeckt ist. Beispielsweise kann der Hartschaumkern als Hartschaumplatte ausgebildet sein.

Vorliegend wird unter einer "Platte" ein flächiges Objekt verstanden, dass eine Oberseite und eine gegenüberliegend zur Oberseite, beispielsweise im Wesentlichen parallel zur Oberseite, angeordnete Unterseite sowie mehrere Seitenflächen aufweist, wobei die Größe der Seitenflächen deutlich kleiner als die Fläche der Ober- und Unterseite ist. Beispielsweise kann die Platte quaderförmig ausgebildet sein, wobei die Ober- und Unterseite die Grund- und Deckfläche des Quaders bilden. Optional können Grund- und Deckfläche auch nicht rechteckig, sondern z. B. dreieckig, trapezförmig oder sechseckig ausgebildet sein. Weiter optional kann die Platte ausgehend von einer Quaderform verformt sein oder werden, beispielsweise zur Anpassung an bauliche Gegebenheiten oder zur Ausbildung eines Gefälles. Optional kann die Platte Rück- oder Vorsprünge oder abgeschrägte Bereiche aufweisen.

Die Wasserdichtigkeit des Hartschaumkerns aus Polyethylenterephthalat resultiert aus der im Wesentlichen geschlossenzelligen Ausbildung der Hartschaumkerns. Geschlossenzellig oder auch geschlossenporig bedeutet, dass die Zellen oder Poren des Hartschaums abgeschlossen sind und somit nicht interkonnektieren. Bei einem weitgehend geschlossenzelligen Hartschaumkern ist die Mehrheit der Zellen abgeschlossen, es können jedoch einzelne Zellen interkonnektieren und insbesondere Zellen an der Oberfläche des Hartschaumkerns nach außen geöffnet sein.

Durch die geschlossenzellige Ausbildung des Hartschaumkerns wird erreicht, dass Wasser oder Feuchtigkeit nicht oder nur in geringem Ausmaß in den Hartschaumkern ein- und durch diesen durchdringen kann. Der Hartschaumkern ist daher wasserdicht, d. h. undurchlässig für Wasser. Das heißt insbesondere, dass sich Feuchtigkeit aufgrund des weitgehend geschlossenzelligen Hartschaumkerns weder in Dickenrichtung des Konstruktionselements, z. B. der Konstruktionsplatte, noch innerhalb des Konstruktionselements auf schädigende Weise ausbreiten kann.

Als "wasserdicht" kann beispielsweise ein Hartschaumkern angesehen werden, der in Anlehnung an die Norm DIN EN 343:2019-06 einer Wassersäule von 800 mm, bevorzugt von 2000 mm, weiter bevorzugt von 10.000 mm und besonders bevorzugt von 30.000 mm standhält. Das Konstruktionselement kann vorzugsweise feuchteunempfindlich und daher für die Wassereinwirkungsklassen W2-I und W3-I gemäß DIN 18534-1: 2017-07 geeignet sein. Weiter vorzugsweise kann das Konstruktionselement der DIN EN ISO 16535:2019-10 entsprechen.

Indem der Hartschaumkern insgesamt wasserdicht ausgebildet ist, kann die Wasserdichtheit auch bei ungünstigen Anwendungsbedingungen, z. B. bei mechanischer Belastung, im Vergleich zur Verwendung von lediglich dünnen wasserdichten Schichten oder wasserdichten Beschichtungen dauerhaft gesichert werden.

Die Dicke des Hartschaumkerns kann bevorzugt zwischen 3 und 100 mm betragen. In Kombination mit einer Dichte zwischen 30 und 300 kg/m³ kann dies für die meisten Anwendungszwecke zu ausreichenden Dämmeigenschaften führen.

Die Hauptvorteile von Konstruktionselementen mit einem Hartschaumkern aus Polyethylenterephthalat sind hervorragende mechanische Eigenschaften, die es beispielsweise erlauben, Befestigungselemente, wie z. B. Nägel, Schrauben, Dübel etc. direkt in das Konstruktionselement einzubringen. Die mechanischen Eigenschaften des geschlossenzelligen und daher wasserdichten Hartschaumkerns gestatten auch einen mechanischen Anschluss an Bauelemente mittels üblicher Montageschrauben ohne zusätzliche Einleimer. Der erfindungsgemäß genutzte Hartschaumkern weist zudem einen genügend guten Schraubauszugswiderstand auf, sodass Schrauben und ähnliche Verbindungselemente mit genügendem Ausreißwiderstand unmittelbar im Hartschaumkern verankert werden.

Zudem zeichnet sich das vorgeschlagene Konstruktionselement durch ein geringes spezifisches Gewicht aus, was die Handhabung und den Transport erheblich erleichtern und sich positiv auf statische Belange auswirken kann. Für Konstruktionselemente mit Polyethylenterephthalat als Hartschaumkern konnte in Langzeitermüdungsprüfungen eine strukturelle und dimensionale Langzeitstabilität nachgewiesen werden, die insbesondere für Bauprodukte wünschenswert ist. Die langfristige Stabilität der Dämmeigenschaften und damit verbunden der sicheren Dämmleistung und ebenso die feuchtigkeitsabweisende geschlossenzellige und homogene Struktur sind Eigenschaften, welche in Räumen wünschenswert sind, in welchen eine mäßige bis hohe Feuchtebelastung zu erwarten ist. Hinzu kommt die Beständigkeit gegenüber Lösungsmitteln, Säuren, Salzen und anderen Stoffen. Die homogene Oberfläche gestattet zudem eine glatte und auch glänzende Beschichtung, die auch als fertige Oberfläche nutzbar und leicht zu reinigen ist.

Gegenüber Konstruktionselementen mit einem Kern aus extrudiertem Polystyrol weist das erfindungsgemäße Konstruktionselement einen deutlich kleineren Wärmedurchgangskoeffizienten, auch als U-Wert bezeichnet, auf. Dies bedeutet, dass für eine gleiche Wärmedämmwirkung ein Konstruktionselement mit einer geringeren Dicke ausreicht, wodurch die Konstruktionsvielfalt erhöht und die Einsatzbereiche des vorgeschlagenen Konstruktionselements vergrößert werden können.

Die Verwendung von Polyethylenterephthalat ist hinsichtlich der Energiebilanz und ebenso hinsichtlich der Nachhaltigkeit des Konstruktionselements von Vorteil, wenn der Hartschaumkern entsprechend einer Ausgestaltung der Erfindung recyceltes Polyethylenterephthalat aufweist oder aus recyceltem Polyethylenterephthalat besteht. Polyethylenterephthalat wird insbesondere zur Herstellung von Trinkflaschen und verschiedensten Lebensmittelfolien verwendet, die nach Gebrauch entsorgt und zunehmend der Wiederaufbereitung zugeführt werden. Somit steht ein Rohstoff mit guter Energiebilanz zur Verfügung, der mit geeigneten produktionsbegleitenden Maßnahmen eine klimaneutrale Produktion des Hartschaumkerns gestattet. Zudem kann der Hartschaumkern selbst wieder recycelt werden.

Mit anderen Worten kann für die Herstellung wie auch die spätere Entsorgung des Hartschaumkerns aufgrund der Verwendung von Polyethylenterephthalat im Gegensatz zu den aus dem Stand der Technik bekannten Kernmaterialien auf ein Ausgangsmaterial zurückgegriffen werden, das sich ökonomisch und ökologisch gut wiederverwerten lässt. Für Polyethylenterephthalat existieren denn auch bereits vielerorts effiziente Recyclingsysteme, insbesondere in Verbindung mit Einweg-Getränkeflaschen. Für die Herstellung des vorgeschlagenen Hartschaumkerns kann vorteilhaft auch wiederverwertetes Polyethylenterephthalat verwendet werden, das etwa aufgrund seiner Farbe oder enthaltener leichter Verunreinigungen für andere Anwendungen nicht mehr geeignet ist.

Erfindungsgemäß ist zumindest eine Schicht mit einem mineralischen Baustoff auf einer Oberfläche des Hartschaumkerns angeordnet, z. B. aufgebracht. Die Schichtdicke der Schicht mit dem mineralischen Baustoff kann vorzugsweise zwischen 0,5 mm und 10 mm betragen. Bevorzugt kann die Schicht mit dem mineralischen Baustoff auf der Ober- oder Unterseite des Hartschaumkerns aufgebracht sein. Optional kann sowohl auf der Oberseite als auch der Unterseite des Hartschaumkerns eine Schicht mit einem mineralischen Baustoff angeordnet sein, wobei die Schichten hierbei gleich oder unterschiedlich, beispielsweise bezogen auf den mineralischen Baustoff, die Schichtdicke und/oder eine optional eingebrachte Bewehrung, aufgebaut sein können.

Die Schicht mit dem mineralischen Baustoff kann direkt auf einer Oberfläche des Hartschaumkerns angeordnet sein, also ohne dazwischenliegende Schichten oder Beschichtungen. Optional kann der Hartschaumkern mit einem Primer bzw. einer Grundierung versehen sein, um eine bessere Haftung der Schicht mit dem mineralischen Baustoff zu erzielen. Alternativ oder zusätzlich kann der Hartschaumkern mit einem Schliff versehen sein, auf den die Schicht mit dem mineralischen Baustoff aufgebracht wird. Auch dies kann zur Haftungsverbesserung beitragen. Ein Schliff der Hartschaumplatte kann auch genutzt werden, um die Dickenkonstanz der Hartschaumplatte zu verbessern.

Optional kann die Schicht bzw. können die Schichten mit dem mineralischen Baustoff aus dem mineralischen Baustoff bestehen.

Unter einem "mineralischen Baustoff" ist vorliegend eine anorganische nichtmetallische Substanz aus kristallinen Bestandteilen zu verstehen. Es kann sich dabei um natürliche Minerale handeln, wie Naturwerkstein, Sand oder Lehm, oder um ein geformtes Stoffgemisch aus gesiebten oder gemahlenen Mineralen, das durch Kristallisation von Bindemitteln, wie z. B. Anhydrit, gebrannter Kalk, Tonminerale, Zement, die gewünschte Festigkeit erhält. Optional können geringe Anteile an organischen Bestandteilen, z. B. Polymeren, enthalten sind, die beispielsweise als Hilfsstoffe dienen können.

Vorzugsweise kann es sich bei dem mineralischen Baustoff um Mörtel und/oder Beton handeln, d. h. auf zumindest einer Oberfläche des Hartschaumkerns kann eine Mörtel- und/oder Betonschicht oder eine Mörtel und/oder Beton enthaltende Schicht aufgebracht sein.

Unter "Mörtel" ist ein Stoffgemisch aus einer Gesteinskörnung mit einer Korngröße von höchstens 4 mm, Zugabewasser und einem Bindemittel, z. B. Kalk und/oder Zement, zu verstehen. Die Gesteinskörnung kann beispielsweise Sand und/oder Feinkies sein. Bei dem Mörtel kann es sich beispielsweise um Mörtel gemäß DIN EN 998-1:2017-02, Teil 1 handeln.

Unter "Beton" ist ein Baustoff zu verstehen, der als Dispersion unter Zugabe von Flüssigkeit aus einem Bindemittel, z. B. Zement, und Zuschlagstoffen, z. B. Gesteinskörnung mit einer Korngröße von höchstens 32 mm, angemischt wird. Bei dem Beton kann es sich beispielsweise um Beton gemäß DIN EN 206:2021-06 handeln.

Beispielsweise können als mineralischer Baustoff sogenannte kunststoffmodifizierte PCM (engl. polymer cement mortar)-Mörtel und/oder PCC (engl. polymer cement concrete)-Betone eingesetzt werden, die physikalisch härtende Kunststoffdispersionen oder Dispersionspulver als Polymerbindemittel enthalten.

Alternativ oder zusätzlich zu den genannten mineralischen Baustoffen können mineralische Dichtschlämme zur Abdichtung von massiven Bauteilen im Innen- und Außenbereich als mineralischer Baustoff genutzt werden. Diese zeichnen sich durch eine einfache Verarbeitung, eine gute Haftung ohne Grundierung auf mattfeuchten Untergründen sowie eine hohe Frost- und Alterungsbeständigkeit aus und sind auch bei negativem Wasserdruck einsetzbar sowie dampfdiffusionsoffen.

Zur Verbesserung der Energiebilanz des Konstruktionselements kann bevorzugt ein sogenannter CO₂-reduzierter mineralischer Baustoff verwendet werden, bei dem die Treibhausgasemissionen gegenüber einem bislang üblichen mineralischen Baustoff durch ein oder mehrere der nachfolgend genannten Maßnahmen reduziert sind: Einsatz nicht-fossiler Sekundärbrennstoffe, Senkung des Energieverbrauchs in der Produktion, Verringerung der rohstoffbedingten Prozessemissionen, z. B. durch Verwendung von weniger Kalkstein.

Beispielsweise kann alternativ oder zusätzlich zu den bereits genannten mineralischen Baustoffen ein sogenannter Flexkleber, z. B. C2TE Flexkleber, beispielsweise auch staubreduziert, als mineralischer Baustoff verwendet werden. Bei dessen Herstellung können aufgrund einer klimafreundlichen und ressourcenschonenden Bindemitteltechnologie ca. 30 % CO₂ eingespart werden. Durch die Airflow Technology ist der Flexkleber besonders leicht und geschmeidig zu verarbeiten. Durch den Einsatz eines klimafreundlichen Bindemittels mit latent hydraulischen Anteilen werden bei der Zementherstellung ca. 5 - 60 % CO₂ eingespart.

Die Schicht mit dem mineralischen Baustoff kann eine Kombination der genannten mineralischen Baustoffe enthalten, beispielsweise in Form eines Stoffgemischs oder in Form von mehreren Teilschichten, für die jeweils ein anderer mineralischer Baustoff genutzt wird.

Die Schicht mit dem mineralischen Baustoff kann wasserdurchlässig sein. Da bereits der Hartschaumkern wasserdicht ist, ist eine wasserdichte Ausbildung der Schicht mit dem mineralischen Baustoff nicht notwendig, so dass eine größere Vielfalt an Materialien für diese Schicht zur Verfügung steht und auch Schichten aufgebracht werden können, die auf einfache Art und Weise, beispielsweise ohne Vorbehandlung, weiterbehandelbar, z. B. mit einem Farbanstrich versehbar sind.

Gemäß verschiedenen Ausführungsvarianten kann das Konstruktionselement eine Bewehrung aufweisen. Die Bewehrung kann beispielsweise als Armierungsgewebe und/oder Bewehrungsvlies ausgeführt sein. Die Bewehrung kann beispielsweise Glasfasern, Kohlefasern, Basaltfasern und/oder Naturfasern, z. B. Jutefasern, aufweisen.

Bei einem "Vlies" handelt es sich vorliegend um ein Flächengebilde aus ausgerichtet oder ungeordnet aufeinanderliegend angeordneten Fasern, Filamenten und/oder geschnittenen Garnen. Die Spinnfasern oder Filamente sind miteinander verklebt, verschweißt, vernäht oder vernadelt. Das Vlies kann wasserdicht ausgebildet sein. Ein Vlies zeichnet sich durch eine homogene Oberfläche aus. Zudem besteht die Möglichkeit, ein Vlies oberflächenfertig vorzufertigen, so dass keine oder nur geringfügige Nachbearbeitungen erforderlich sind.

Unter einem "Gewebe" ist vorliegend ein textiles Flächengebilde zu verstehen, das aus mindestens zwei Fadensystemen, Kette und Schuss, besteht, die sich in der Sicht auf die Gewebefläche unter einem Winkel von genau oder annähernd 90° mustermäßig kreuzen.

Die Bewehrung kann direkt auf dem Hartschaumkern angeordnet sein, also zwischen dem Hartschaumkern und der Schicht mit dem mineralischen Baustoff angeordnet sein.

Alternativ kann die Schicht mit dem mineralischen Baustoff die Bewehrung aufweisen, so dass als Abfolge mineralischer Baustoff - Bewehrung - mineralischer Baustoff resultiert.

Die Bewehrung kann Zugkräfte des mineralischen Baustoffs und/oder des gesamten Konstruktionselements aufnehmen. Durch die Verwendung einer Bewehrung in der mineralischen Schicht kann eine Rissbildung, beispielsweise verursacht durch ungleichmäßiges Trocknen des mineralischen Baustoffs, verringert werden. Es kann eine mineralische Schicht mit höherer mechanischer Stabilität erhalten werden. Zudem bildet die Schicht mit dem mineralischen Baustoff bei darin eingelassener Armierung einen enorm starken Haftuntergrund.

Gemäß weiteren Ausführungsvarianten kann der Hartschaumkern zumindest abschnittsweise uneben sein.

Der Hartschaumkern aus Polyethylenterephthalat kann thermoformbar sein, d. h. die dreidimensionale Gestalt kann durch Wärmeeinwirkung geändert werden. Beispielsweise ist vor der Anordnung der Schicht(en) mit dem mineralischen Baustoff eine Formgebung des Hartschaumkerns möglich. Mit der Formgebung kann der Hartschaumkern beispielsweise an bauliche Gegebenheiten angepasst werden. Auch Verformungen innerhalb einer Oberfläche sind möglich. Beispielsweise kann der Hartschaumkern zumindest abschnittsweise uneben, beispielsweise einseitig uneben sein. Uneben bedeutet, dass die Punkte einer Oberfläche des Hartschaumkerns nicht in einer Ebene liegen. Bei Auftragung der Schicht mit dem mineralischen Baustoff mit gleichmäßiger Schichtdicke kann die Gestalt des Hartschaumkerns auf das gesamte Konstruktionselement übertragen werden.

Gemäß weiteren Ausführungsvarianten kann das Konstruktionselement zumindest eine Deckschicht aufweisen.

Beispielsweise kann eine Deckschicht auf einer oder mehreren Schichten mit dem mineralischen Baustoff angeordnet sein und/oder es kann eine Deckschicht direkt auf dem Hartschaumkern angeordnet sein. Dies bedeutet, dass sich folgende Abfolgen ergeben können: a) Deckschicht - Schicht mit einem mineralischen Baustoff - Hartschaumkern - Schicht mit einem mineralischen Baustoff - Deckschicht, b) Schicht mit einem mineralischen Baustoff - Hartschaumkern - Schicht mit einem mineralischen Baustoff - Deckschicht, c) Deckschicht - Hartschaumkern - Schicht mit einem mineralischen Baustoff - Deckschicht und d) Deckschicht - Schicht mit einem mineralischen Baustoff - Hartschaumkern - Schicht mit einem mineralischen Baustoff.

Vorzugsweise kann auf beiden Seiten des Hartschaumkerns das gleiche Material als Deckschicht aufgebracht sein, um eine gegensätzliche Verformung oder Schüsselung zu vermeiden.

Die Deckschicht kann beispielsweise ein oder mehrere Deckelemente umfassen. Die Deckschicht kann beispielsweise zur ästhetischen und/oder funktionellen Gestaltung des Konstruktionselements genutzt werden, beispielsweise indem als Deckschicht eine Farb- oder Lackschicht aufgebracht ist, die neben einer gestalterischen Wirkung auch dem Schutz der darunterliegenden Schicht mit dem mineralischen Baustoff und dem Hartschaumkern dient. Beispielsweise kann die Deckschicht wasserabweisend, wasserdicht und/oder selbstreinigend, z. B. nach dem Vorbild der Lotuspflanze, ausgebildet sein. Die Deckschicht kann beispielsweise auch durch ein Vlies oder ein Hochdrucklaminat (engl. high pressure laminate, HPL) gebildet sein.

Weitere Möglichkeiten für Deckschichten sind beispielsweise Fliesen, Laminate oder Kunststoffbeschichtungen.

Mittels der Deckschicht lassen sich Eigenschaften des Konstruktionselements gezielt einstellen, so dass das Konstruktionselement bedarfsgerecht ausgebildet werden bzw. sein kann.

Gemäß weiteren Ausführungsvarianten kann der Hartschaumkern eine Dichte im Bereich zwischen 30 bis 300 kg/m³, bevorzugt von 60 bis ca. 300 kg/m³, und/oder eine Druckfestigkeit im Bereich von 100 kPa bis 2.000 kPa aufweisen.

Aufgrund der vergleichsweise niedrigen Dichte des Hartschaumkerns kann ein Konstruktionselement mit einem geringen Flächengewicht erhalten werden, die daher flexibel einsetzbar ist und keiner speziellen Befestigung bedarf. Dadurch kann das Konstruktionselement für verschiedene Verwendungen und Gestaltungen genutzt werden, die zudem mit der gewünschten Stabilität und Dämmung erzielt werden können. Die hohe Stabilität wird unter anderem durch eine Druckfestigkeit des Polyethylenterephthalats erreicht, die im Bereich von 100 bis 2.000 kPa, beispielsweise im Bereich von 200 bis 2.000 kPa, liegen kann. Die geringe Dichte bei hoher Stabilität in Verbindung mit der Vielgestaltigkeit der Oberfläche gestattet auch die Vorfertigung von fertigen Raumkomponenten, wie Duschzellen oder ganze Badzellen unter Verwendung des beschriebenen Konstruktionselements.

Gemäß weiteren Ausführungsvarianten kann vorgesehen sein, dass das Konstruktionselement keine wasserdichte Schicht oder Beschichtung aufweist.

Da der Hartschaumkern bereits wasserdicht ausgeführt ist, kann eine weitere wasserdichte Schicht vorzugsweise entfallen.

Dies kann zur Verringerung der Produktionskosten beitragen und einen vielfältigeren Materialeinsatz erlauben.

Gemäß weiteren Ausführungsvarianten kann der der Hartschaumkern mehrere Polyethylenterephthalatschichten aufweisen. Mit anderen Worten kann der Hartschaumkern, insbesondere bei einer plattenförmigen Ausgestaltung, aus mehreren Schichten aufgebaut sein, wobei diese Schichten optional unterschiedliche Dicken und/oder Dichten aufweisen können. Insbesondere können jene Schichten des Hartschaumkerns in den Bereichen, in denen z. B. eine Montageschraube verankert werden oder eine Steckverbindung erfolgen soll, höhere Dichten aufweisen als jene, die mechanisch weniger belastet werden. Auf diese Weise können sowohl der Wärmedämmwert des Konstruktionselements erhöht als auch das Gewicht des Konstruktionselements gesenkt werden. Gleichzeitig kann dadurch die Menge des zur Herstellung benötigten Polyethylenterephthalat-Rohmaterials gesenkt werden

Gemäß weiteren Ausführungsvarianten kann das Konstruktionselement als Bauplatte oder Duschbodenelement ausgebildet sein.

Der Begriff "Bauplatte" bezeichnet vorliegend ein plattenförmiges Objekt, dass zum konstruktiven Bauen verwendet werden kann, beispielsweise zur Errichtung einer Wand oder Decke, zur Oberflächenverkleidung einer vorhandenen Wand oder Decke, zum Aufbau eines Fußbodens auf einer vorhandenen Bodenplatte oder Geschossdecke.

Der Begriff "Duschbodenelement" bezeichnet vorliegend ein Tragelement für einen Duschplatz, welches tragfähig genug ist, um in Verbindung mit dem Untergrund oder einem Unterbau das standardgemäße Gewicht des Nutzers des Duschplatzes zu tragen.

Häufig ist es erforderlich, dass derartige Duschbodenelemente nur eine geringe Höhe aufweisen, so dass sie, gegebenenfalls auch einschließlich der Abflussleitungen und/oder einer Stufe oder Schwelle, im Fußbodenaufbau vollständig integriert werden können. Zur Reduzierung der Aufbauhöhe können Duschbodenelemente mit einem vor Ort herzustellenden Fliesenbelag oder mit einer oberflächenfertigen, plattenartigen Deckschicht belegt sein. Letztere kann eine geringere Dicke als Fliesenbelag aufweisen und zudem sehr variabel und individuell den Kundenwünschen entsprechend gestaltet werden, sowohl hinsichtlich der Geometrie als auch des Oberflächendesigns.

In dem Duschbodenelement kann ein Ablauf für das Duschwasser ausgebildet sein. Dieser kann eine Ablauföffnung sowie einen in der Oberseite des Duschbodenelements eingearbeiteten Ablaufbereich einschließen. Letzterer weist ein zur Ablauföffnung verlaufendes Gefälle auf, wobei Grundriss und Grad des Gefälles den planerischen Vorgaben und Regeln folgend variabel ausgebildet sein können. Die Oberseite des Duschbodenelements kann zudem einen planen, d. h. in einer Ebene liegenden, Randbereich aufweisen. Augenscheinlich soll ein solcher um den Betrag des Gefälles über der Ablauföffnung stehender Randbereich verhindern, dass in dem Duschbodenelement stehendes Wasser an tieferen Stellen über den Rand abfließen oder an aufstehenden Wänden stehen kann. Die Breite des Randbereichs kann sehr variabel gestaltet, auch sehr schmal sein.

Ist eine Deckschicht, z. B. ein Deckelement oder eine Deckplatte, vorhanden, weist diese folglich ebenfalls eine entsprechende Ablauföffnung auf. Die Deckschicht ist auf geeignete Weise mit der Oberseite der darunterliegenden Schicht bzw. des darunterliegenden Hartschaumkerns fest verbunden. Die Deckschicht kann hierbei als ein- oder mehrteilige Platte, als aufgebrachter Bodenbelag, beispielsweise Fliesenbelag, oder als Beschichtung ausgeführt sein.

Derartige Duschbodenelemente werden insbesondere bei bodengleichen Duschen verwendet, bei denen der Duschboden mit dem umgebenden Fußboden auf gleichem oder nur geringfügig höherem Höhenniveau liegt. Ein wesentlicher Vorteil dieser bodengleichen Duschen besteht in der verbesserten Zugänglichkeit infolge des Fehlens von Stufen. Um jedoch zu gewährleisten, dass das abfließende Duschwasser auch bei hohem Wasseranfall sicher in den Auflauf geleitet wird und die Übergänge zu umgebenden Wänden und Fußböden zuverlässig und dauerhaft gegenüber anstehendem Wasser geschützt sind, sind die Ablauföffnungen und das zu letzteren hinführende Gefälle des Duschbodens entsprechend auszubilden und gegebenenfalls mit geeigneten Bodenschwellen oder Stufen geringer Höhe aus dem Duschbodenelement auf den angrenzenden Fußboden zu kombinieren.

Von Vorteil erweist es sich hierbei, dass der Hartschaumkern wie oben beschrieben verformbar ist, so dass das Gefälle und andere unebene Bereiche des Hartschaumkerns durch Tiefziehen ausgebildet sein bzw. werden können, wie nachfolgend zum Verfahren näher dargelegt. Damit sind eine effiziente Herstellung des Duschbodenelements und vielfältige Gestaltungsmöglichkeiten hinsichtlich dessen Geometrie möglich.

Als "Oberseite" und "Unterseite" der genannten Elemente werden infolge des horizontalen Einbaus des Duschbodenelements üblicherweise die, der Schwerkraftrichtung folgende, obere und untere Oberfläche des betreffenden Elements bezeichnet. Die beide Oberflächen verbindenden Flächen sind, ebenfalls gemäß der allgemein üblichen Bezeichnung, die Seitenflächen.

Ein weiterer Aspekt betrifft ein Verfahren zur Herstellung eines Konstruktionselements. Das Verfahren weist auf: Bereitstellen eines wasserdichten Hartschaumkerns aus Polyethylenterephthalat und Anordnen einer Schicht mit einem mineralischen Baustoff auf zumindest einer Oberfläche des Hartschaumkerns.

Mittels des vorgeschlagenen Verfahrens kann eines der vorstehend beschriebenen Konstruktionselemente hergestellt werden. Die Erläuterungen zu diesen Konstruktionselementen sind entsprechend auf deren Herstellungsverfahren übertragbar. Mit dem Herstellungsverfahren sind die Vorteile der vorgeschlagenen Konstruktionselemente entsprechend verbunden.

Optional kann das Verfahren das Anordnen einer Deckschicht auf der Schicht mit dem mineralischen Baustoff aufweisen.

Weiter optional kann das Verfahren eine Vorbehandlung des Hartschaumkerns vor dem Anordnen der Schicht mit dem mineralischen Baustoff aufweisen. Eine solche Vorbehandlung kann beispielsweise ein Reinigen und/oder Aufrauen der Oberfläche des Hartschaumkerns vor dem Anordnen der Schicht mit dem mineralischen Baustoff umfassen. Hierdurch kann die Haftung der Schicht mit dem mineralischen Baustoff auf dem Hartschaumkern verbessert werden, wodurch die mechanische Stabilität des Konstruktionselements insgesamt verbessert werden kann.

Beispielsweise kann der Hartschaumkern mit einem Primer bzw. einer Grundierung beschichtet werden, um eine bessere Haftung der Schicht mit dem mineralischen Baustoff zu erzielen. Alternativ oder zusätzlich kann der Hartschaumkern mit einem Schliff versehen werden, auf den die Schicht mit dem mineralischen Baustoff aufgebracht wird. Auch dies kann zur Haftungsverbesserung beitragen.

Weiter optional kann der Hartschaumkern vor dem Auftragen der Schicht mit dem mineralischen Baustoff zur Verbesserung der Dickenkonstanz geschliffen werden. Da bei einem thermischen oder mechanischen Schneiden des Hartschaumkerns häufig ein Hartschaumkern mit unzureichender Ebenheit erhalten wird, kann mittels Schleifen eine Ebenheit innerhalb eines vorgebbaren Toleranzbereichs erreicht werden. Ein Schleifen bzw. das Versehen mit einem Schliff kann zudem zu einer verbesserten Verklebung mit einer Bewehrung, z. B. einem Vlies, führen, da u. a. ein Klebstoff mit gleichmäßigerer Schichtdicke einfacher aufbringbar ist.

Während des Anordnens der Schicht mit dem mineralischen Baustoff auf dem Hartschaumkern kann optional eine Bewehrung in diese Schicht eingebracht werden. Hierfür kann beispielsweise zunächst eine erste Teilschicht mit dem mineralischen Baustoff auf den Hartschaumkern aufgebracht werden, auf welche die Bewehrung aufgelegt und anschließend mit einer zweiten Teilschicht mit dem mineralischen Baustoff verdeckt wird.

Die Herstellung des vorgeschlagenen Konstruktionselements kann vorzugsweise in einem kontinuierlichen Prozess erfolgen, wobei die Schicht mit dem mineralischen Baustoff, die Deckschicht und/oder ggf. weitere Schichten über Beschichtungsmaschinen auf den Hartschaumkern aufgetragen werden.

Weiter optional können im Konstruktionselement unebene Abschnitte und/oder ein Gefälle durch Tiefziehen während der Herstellung des Konstruktionselements ausgebildet werden. Die Beibehaltung der Dicke im tiefgezogenen Bereich des Hartschaumkerns, wie von Tiefziehverfahren metallischer Platten bekannt, ist dabei nicht erforderlich. Je nach gewünschtem Profil des Hartschaumkerns können die Vertiefungen ein- oder beidseitig ausgebildet werden. Das Tiefziehen kann auf verschiedene Weise erfolgen, beispielsweise mit Tiefziehwerkzeug, wie Matrize und Stempel, oder mit einem Tiefziehmedium, wie einem flüssigkeits- oder einem gasgefüllten Stempelkissen.

Weiter optional kann ein Gefälle in die Oberseite des Konstruktionselements eingebracht werden, indem dessen Hartschaumkern auf eine, optional ebenen, Unterlage gelegt wird und mittels eines Stempels oder Stempelkissens, optional ebenfalls unter Zwischenlage einer Membran, oberseitig verformt wird. Bei dem Stempelkissen handelt es sich um ein bevorzugt mit einer Flüssigkeit, optional mit einem Gas gefülltes Kissen, dessen unterseitige Oberflächenform jener des herzustellenden Gefälles entspricht.

Weiter optional kann das Tiefziehen unter Einwirkung von Wärme ausgeführt werden, wobei die Temperatur in einem solchen Bereich gewählt wird, welcher eine Schwächung der Trageigenschaften oder eine strukturelle, die Verwendbarkeit des Hartschaumkerns beeinträchtigende Schädigung des Hartschaums vermeidet.

Ein weiterer Aspekt der Erfindung betrifft die Verwendung eines Konstruktionselements gemäß vorstehender Beschreibung zur Errichtung einer Wand oder Decke, zur Oberflächenverkleidung einer vorhandenen Wand oder Decke, zum Aufbau eines Fußbodens auf einer vorhandenen Bodenplatte oder Geschossdecke, z. B. in Gebäuden, oder zur Herstellung einer Standfläche eines Duschplatzes.

Die Erläuterungen zu diesen Konstruktionselementen sind entsprechend auf deren Verwendung übertragbar. Mit der Verwendung sind die Vorteile der vorgeschlagenen Konstruktionselemente entsprechend verbunden.

Aufgrund der zuvor beschriebenen Eigenschaften der erfindungsgemäßen Konstruktionselemente, insbesondere der wasserdichten, langzeitstabilen und dimensionsstabilen Struktur ist das Konstruktionselement besonders zur Ausbildung eines Duschbodenelements, welches beispielsweise eine Standfläche eines Duschplatzes bilden kann, geeignet.

Das Konstruktionselement kann darüber hinaus aufgrund der sehr guten Wärmedämmeigenschaften und der Wasserdichtheit insbesondere für solche Bauteile in einem Gebäude eingesetzt werden, welche einer erhöhten Feuchtigkeitsbelastung ausgesetzt sind, wie beispielsweise Bäder, Saunaräume, unbeheizte oder wenig beheizte Räume in einem sonst beheizten Gebäude und ähnliche.

Das Konstruktionselement kann beispielsweise zur Herstellung von Trennwänden, Unterteilungen eines Raumes, Verkofferungen von Einbauten, innenseitigen Dachverkleidungen und ähnlichem verwendet werden.

Ein weiterer Aspekt der Erfindung betrifft ein Bauobjekt mit einem Konstruktionselement gemäß vorstehender Beschreibung.

Die Erläuterungen zu diesen Konstruktionselementen sind entsprechend auf das Bauobjekt übertragbar. Mit dem Bauobjekt sind die Vorteile der vorgeschlagenen Konstruktionselemente entsprechend verbunden.

Bei dem Bauobjekt kann es sich um ein ortsfestes Objekt, wie z. B. ein Gebäude, der ein ortsveränderliches Objekt, z. B. ein Mobilheim o.ä., handeln.

Im Folgenden wird die Erfindung beispielhaft unter Bezugnahme auf die anliegenden Figuren anhand bevorzugter Ausführungsformen erläutert, wobei die nachfolgend dargestellten Merkmale sowohl jeweils für sich genommen als auch in verschiedenen Kombinationen miteinander einen Aspekt der Erfindung darstellen können. Die zugehörigen Zeichnungen zeigen in
- Fig. 1: ein beispielhaftes Konstruktionselement in Explosionsdarstellung;
- Fig. 2: ein weiteres beispielhaftes Konstruktionselement in Explosionsdarstellung; und
- Fig. 3: ein beispielhaftes Duschbodenelement in Draufsicht.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Die Figuren zeigen nur die zum Verständnis notwendigen Details. Sie erheben keinen Anspruch auf Vollständigkeit oder Maßstäblichkeit. In den Figuren werden identische oder ähnliche Elemente mit identischen Bezugszeichen versehen, soweit dies zweckmäßig ist.

Die verwendete Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist in keinerlei Weise einschränkend.

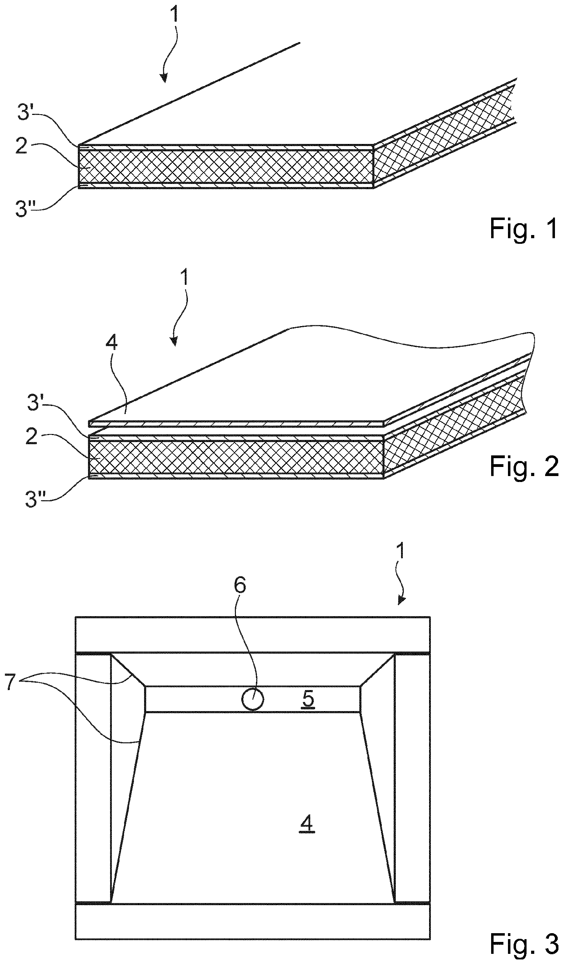

Fig. 1 zeigt ein beispielhaftes Konstruktionselement 1 in einer schematischen Darstellung, welches als Bauplatte ausgebildet ist. Das Konstruktionselement 1 umfasst eine wasserdichte Hartschaumplatte aus Polyethylenterephthalat als Hartschaumkern 2. Der Hartschaumkern 2 weist eine Dichte im Bereich zwischen 30 bis 300 kg/m³ und eine Druckfestigkeit im Bereich von 100 kPa bis 2.000 kPa auf. Vorzugsweise handelt es sich bei dem Polyethylenterephthalat zumindest teilweise um recyceltes Polyethylenterephthalat.

Der Hartschaumkern 2 ist vollständig eben ausgebildet. Je nach Einsatzzweck kann der Hartschaumkern 2 jedoch auch zumindest abschnittsweise, z. B. auf der Oberseite, uneben ausgebildet sein.

Der Hartschaumkern 3 ist beidseitig, d. h. auf der Oberseite und der Unterseite, mit jeweils einer Schicht 3', 3" versehen, die einen mineralischen Baustoff aufweist. Im Ausführungsbeispiel handelt es sich hierbei um Mörtelschichten mit einem eingebetteten Armierungsgewebe aus Glasfasern (nicht dargestellt).

In der in Fig. 1 gezeigten Ausführungsform weist die Bauplatte ausschließlich den Hartschaumkern 2 und die beiden Schichten 3', 3" mit dem mineralischen Baustoff auf. Mit anderen Worten sind keine weiteren Schichten oder Beschichtungen vorhanden, insbesondere auch keine wasserdichten Schichten oder Beschichtungen vorhanden. Die Wasserdichtigkeit des Konstruktionselements 1 resultiert allein durch die wasserdichte Ausbildung des Hartschaumkerns 2.

Fig. 2 zeigt ein weiteres beispielhaftes Konstruktionselement 1. Im Unterschied zum in Fig. 1 dargestellten und vorstehend unter Bezugnahme auf Fig. 1 erläuterten Konstruktionselement 1 weist das Konstruktionselement 1 gemäß Fig. 2 zusätzlich eine Deckschicht 4 auf, die auf der oberen Schicht 3' mit dem mineralischen Baustoff aufgebracht ist. Die Deckschicht 4 kann beispielsweise als Fliesenbelag oder Farbbeschichtung ausgebildet sein. Optional kann auch auf der unteren Schicht 3" mit dem mineralischen Baustoff eine weitere Deckschicht aufgebracht sein (nicht dargestellt).

In der in Fig. 2 gezeigten Ausführungsform weist die Bauplatte ausschließlich den Hartschaumkern 2, die beiden Schichten 3', 3" mit dem mineralischen Baustoff und die Deckschicht 4 auf. Mit anderen Worten sind keine weiteren Schichten oder Beschichtungen vorhanden, insbesondere auch keine wasserdichten Schichten oder Beschichtungen vorhanden. Die Wasserdichtigkeit des Konstruktionselements 1 resultiert allein durch die wasserdichte Ausbildung des Hartschaumkerns 2.

Fig. 3 zeigt ein Konstruktionselement 1, welches als Duschbodenelement ausgebildet ist, in der Draufsicht. Der obere, in Fig. 3 sichtbare Abschluss des Duschbodenelements ist durch eine Deckschicht 4 gebildet, die als einteiliges, oberflächenfertiges Deckelement aus beispielsweise, jedoch nicht beschränkend, einem Mineralwerkstoff oder Kunststoff, gebildet ist. Das Deckschicht 4 ist wie zu Fig. 2 beschrieben auf der darunterliegenden, in Fig. 2 nicht erkennbaren Schicht 3' mit dem mineralischen Baustoff angeordnet und fixiert.

Die Deckschicht 4 weist eine Ablaufrinne 5 auf, in welcher mittig eine kreisförmige Ablauföffnung 6 ausgebildet ist. Das Deckschicht 4 weist zudem fachmännisch ausgebildete Gefälle 7, welche ausgehend von jeder Seitenkante der Deckschicht 4 jeweils zur korrespondierenden Seitenkante der Ablaufrinne 8 verlaufen. Das Gefälle 7 wurde hierbei durch Tiefziehen des Hartschaumkerns 2 ausgebildet, bevor auf den Hartschaumkern 2 oberseitig eine Schicht 3' mit dem mineralischen Baustoff und darauf die Deckschicht 4 aufgebracht wurden.

### Bezugszeichenliste

- 1: Konstruktionselement
- 2: Hartschaumkern
- 3', 3": Schicht mit einem mineralischen Baustoff
- 4: Deckschicht
- 5: Ablaufrinne
- 6: Ablauföffnung
- 7: Gefälle

## Patentansprüche

1. Konstruktionselement (1), aufweisend:
- einen wasserdichten Hartschaumkern (2) aus Polyethylenterephthalat und
- zumindest eine auf einer Oberfläche des Hartschaumkerns (2) angeordnete Schicht (3', 3") mit einem mineralischen Baustoff.

2. Konstruktionselement (1) nach Anspruch 1, wobei der mineralische Baustoff Mörtel oder Beton ist.

3. Konstruktionselement (1) nach einem der vorstehenden Ansprüche, aufweisend:
- eine Bewehrung.

4. Konstruktionselement (1) nach Anspruch 3, wobei die Bewehrung als Armierungsgewebe und/oder Bewehrungsvlies ausgeführt ist.

5. Konstruktionselement (1) nach Anspruch 3 oder 4, wobei die Bewehrung Glasfasern, Kohlefasern, Basaltfasern und/oder Naturfasern aufweist.

6. Konstruktionselement (1) nach einem der vorstehenden Ansprüche, wobei der Hartschaumkern (2) recyceltes Polyethylenterephthalat aufweist oder aus recyceltem Polyethylenterephthalat besteht.

7. Konstruktionselement (1) nach einem der vorstehenden Ansprüche, wobei der Hartschaumkern (2) zumindest abschnittsweise uneben ist.

8. Konstruktionselement (1) nach einem der vorstehenden Ansprüche, aufweisend:
- zumindest eine Deckschicht (4).

9. Konstruktionselement (1) nach einem der vorstehenden Ansprüche, wobei der Hartschaumkern (2) eine Dichte im Bereich zwischen 30 bis 300 kg/m³ und/oder eine Druckfestigkeit im Bereich von 100 kPa bis 2.000 kPa aufweist.

10. Konstruktionselement (1) nach einem der vorstehenden Ansprüche, wobei das Konstruktionselement (1) keine wasserdichte Schicht oder Beschichtung aufweist.

11. Konstruktionselement (1) nach einem der vorstehenden Ansprüche, wobei der Hartschaumkern (2) mehrere Polyethylenterephthalatschichten aufweist.

12. Konstruktionselement (1) nach einem der vorstehenden Ansprüche, ausgebildet als Bauplatte oder Duschbodenelement.

13. Verfahren zur Herstellung eines Konstruktionselements (1), das Verfahren aufweisend:
- Bereitstellen eines wasserdichten Hartschaumkerns (3) aus Polyethylenterephthalat und
- Anordnen einer Schicht (3', 3") mit einem mineralischen Baustoff auf zumindest einer Oberfläche des Hartschaumkerns (2).

14. Verwendung eines Konstruktionselements (1) nach einem der Ansprüche 1 bis 12 zur Errichtung einer Wand oder Decke, zur Oberflächenverkleidung einer vorhandenen Wand oder Decke, zum Aufbau eines Fußbodens auf einer vorhandenen Bodenplatte oder Geschossdecke oder zur Herstellung einer Standfläche eines Duschplatzes.

15. Bauobjekt mit einem Konstruktionselement (1) nach einem der Ansprüche 1 bis 12.

## Geänderte Patentansprüche

### Geänderte Patentansprüche gemäss Regel 137(2) EPÜ.

1. Konstruktionselement (1), aufweisend:
- einen wasserdichten, im Wesentlichen geschlossenzelligen Hartschaumkern (2) aus Polyethylenterephthalat, bei welchem die Mehrheit der Zellen abgeschlossen sind und nicht interkonnektieren und
- zumindest eine auf einer Oberfläche des Hartschaumkerns (2) angeordnete Schicht (3', 3") mit einem mineralischen Baustoff,
- wobei das Konstruktionselement (1) keine wasserdichte Schicht oder Beschichtung aufweist.

2. Konstruktionselement (1) nach Anspruch 1, wobei der mineralische Baustoff Mörtel oder Beton ist.

3. Konstruktionselement (1) nach einem der vorstehenden Ansprüche, aufweisend:
- eine Bewehrung.

4. Konstruktionselement (1) nach Anspruch 3, wobei die Bewehrung als Armierungsgewebe und/oder Bewehrungsvlies ausgeführt ist.

5. Konstruktionselement (1) nach Anspruch 3 oder 4, wobei die Bewehrung Glasfasern, Kohlefasern, Basaltfasern und/oder Naturfasern aufweist.

6. Konstruktionselement (1) nach einem der vorstehenden Ansprüche, wobei der Hartschaumkern (2) recyceltes Polyethylenterephthalat aufweist oder aus recyceltem Polyethylenterephthalat besteht.

7. Konstruktionselement (1) nach einem der vorstehenden Ansprüche, wobei der Hartschaumkern (2) zumindest abschnittsweise uneben ist.

8. Konstruktionselement (1) nach einem der vorstehenden Ansprüche, aufweisend:
- zumindest eine Deckschicht (4).

9. Konstruktionselement (1) nach einem der vorstehenden Ansprüche, wobei der Hartschaumkern (2) eine Dichte im Bereich zwischen 30 bis 300 kg/m³ und/oder eine Druckfestigkeit im Bereich von 100 kPa bis 2.000 kPa aufweist.

10. Konstruktionselement (1) nach einem der vorstehenden Ansprüche, wobei der Hartschaumkern (2) mehrere Polyethylenterephthalatschichten aufweist.

11. Konstruktionselement (1) nach einem der vorstehenden Ansprüche, ausgebildet als Bauplatte oder Duschbodenelement.

12. Verfahren zur Herstellung eines Konstruktionselements (1) nach einem der vorstehenden Ansprüche, das Verfahren aufweisend:
- Bereitstellen eines wasserdichten Hartschaumkerns (3) aus Polyethylenterephthalat und
- Anordnen einer Schicht (3', 3") mit einem mineralischen Baustoff auf zumindest einer Oberfläche des Hartschaumkerns (2).

13. Verwendung eines Konstruktionselements (1) nach einem der Ansprüche 1 bis 12 zur Errichtung einer Wand oder Decke, zur Oberflächenverkleidung einer vorhandenen Wand oder Decke, zum Aufbau eines Fußbodens auf einer vorhandenen Bodenplatte oder Geschossdecke oder zur Herstellung einer Standfläche eines Duschplatzes.

14. Bauobjekt mit einem Konstruktionselement (1) nach einem der Ansprüche 1 bis 12.
